# FASCICULE DE BREVET EUROPEEN

(11) **EP 2 820 920 B1**
(45) Date de publication et mention de la délivrance du brevet: **08.06.2016**
(21) Numéro de dépôt: 13713467.2
(22) Date de dépôt: 20.02.2013
(51) Int. Cl.: H05B 33/08, G09F 9/33, H05B 37/02

(54) **DISPOSITIF D'ÉCLAIRAGE PORTABLE INTELLIGENT**
INTELLIGENTE TRAGBARE BELEUCHTUNGSVORRICHTUNG
SMART PORTABLE LIGHTING DEVICE

(30) Priorité: 29.02.2012 FR 1200599
(43) Date de publication de la demande: 07.01.2015
(73) Titulaire: Pellenc SA, 84120 Pertuis (FR)
(72) Inventeur: PELLENC, Roger, 84120 Pertuis (FR)
(74) Mandataire: Marek, Pierre
(86) Numéro de dépôt international: PCT/FR2013/050349
(87) Numéro de publication internationale: WO 2013/128098

(56) Documents cités:
- WO-A2-2010/057138
- GB-A- 2 476 466
- US-A- 4 890 093
- US-A1- 2005 007 304
- US-A1- 2009 058 680
- US-A1- 2009 079 398
- US-A1- 2009 316 392
- US-A1- 2011 156 926

## Description

La présente invention concerne un dispositif d'éclairage portable intelligent.

Elle s'applique, en particulier, à un dispositif d'éclairage portable intelligent, léger, puissant et durable, agencé pour être opérationnel immédiatement sans maintenance même en cas de non utilisation prolongée, pour pouvoir être connecté au réseau de distribution électrique ou disposant de sa propre source d'énergie électrique sous la forme de batteries rechargeables, et apte à éclairer, selon les besoins des utilisateurs, de larges zones d'actions diverses, lors d'opérations variées telles que des interventions de sécurité ou de secours (par exemple, interventions d'urgentistes sur des lieux d'accident, sauvetage de personnes en cas de cataclysme naturel empêchant toute communication routière classique), ou de travaux nécessitant un bon éclairement avec une autonomie d'au moins plusieurs heures, de façon constante, en cas de défaillance du réseau électrique ou d'impossibilité d'accès audit réseau.

En de nombreuses circonstances, il est indispensable d'amener temporairement des installations d'éclairage artificiel sur des sites d'intervention divers, de sorte à obtenir l'éclairement de scènes d'action, pour que les intervenants puissent accomplir les tâches exigeant une bonne vision de l'environnement, afin qu'ils puissent agir dans les meilleures conditions de visibilité possibles.

Les collectivités publiques imposent parfois de disposer de tels équipements qui doivent être disponibles à tout moment et mis en oeuvre très rapidement en fonction des circonstances cataclysmiques et ce même si cet équipement est stocké sur des périodes prolongées avec une maintenance parfois inexistante au cours de cette période.

Ces installations d'éclairage électrique temporaires sont transportées sur les sites d'utilisation, par exemple au moyen de véhicules légers, ou de bêtes de somme, mais il est avantageux de pouvoir les transporter facilement par un seul homme avec une pénibilité réduite dans le cas où des circonstances telles que des cataclysmes rendent impossible l'utilisation d'autres moyens permettant d'acheminer rapidement des sources de lumière puissantes et durables sur les lieux d'intervention.

Il est connu, pour répondre aux besoins susmentionnés, et notamment sur les chantiers de travaux publics, d'employer des installations d'éclairage transportables autonomes utilisant des sources d'énergie diverses et constituées par :
- des dispositifs d'éclairage à gaz, fonctionnant avec des bouteilles de gaz ;
- des dispositifs d'éclairage électrique constitués de projecteurs classiques alimentés par des groupes électrogènes,
- des dispositifs d'éclairage électrique alimentés par batteries au plomb utilisant des lampes à décharge, par exemple des lampes au Xenon.

Les principaux inconvénients de ces dispositifs d'éclairage sont les suivants :
- ils sont lourds et encombrants et ne peuvent être transportés facilement par un seul homme, si ce n'est en utilisant plusieurs personnes transportant chacune une partie du dispositif d'éclairage. Dans ces conditions, son réassemblage sur le site d'action sera plus long à mettre en oeuvre, et il n'est pas très avantageux de mobiliser plusieurs personnes pour un même dispositif,
- la plupart d'entre eux consomment des énergies fossiles en quantités importantes, lesquelles sont de plus en plus chères et dont les conditions de stockage sont de plus en plus draconiennes et réglementées,
- ils supportent mal des périodes de stockage prolongées sans utilisation, de sorte qu'ils nécessitent souvent des opérations de maintenance au moment où on en a besoin, rendant leur disponibilité aléatoire et la plupart du temps non immédiate,
- leur puissance lumineuse n'est que peu ou pas réglable, limitant ainsi en mode autonome la possibilité d'allonger la durée d'éclairement en réduisant la puissance lumineuse,
- la durée d'éclairement et plus précisément la durée d'éclairement restante n'est pas connue ni modifiable lorsque la source d'énergie est limitée en utilisation autonome,
- quand la source d'énergie est autonome et approche de l'épuisement, l'éclairage diminue alors rapidement, de façon non maitrisée, et peut générer des situations graves en cas d'extinction totale de la zone alors que des interventions critiques sont encore en cours dans ladite zone. La durée d'éclairement restante déterminée alors à partir du moment où l'éclairage décline ne permet pas d'alerter les utilisateurs suffisamment tôt afin de leur permettre de procéder à la mise en sécurité de la zone d'action avant extinction complète de l'éclairage,
- ils n'offrent pas ou que peu de possibilité de se connecter à une autre source d'énergie, par exemple l'énergie du réseau électrique, quand celle-ci est disponible, et en tous cas ne donnent pas la possibilité de changer instantanément et automatiquement de source d'énergie quand la source d'énergie principale devient subitement indisponible.

Seule l'utilisation d'une pluralité de systèmes d'éclairage permettrait de minimiser le risque de manquer subitement de lumière dans la zone considérée et/ou d'avoir à faire face à des durées d'éclairement insuffisantes pour achever les travaux ou interventions en cours. Ceci est tout à fait concevable sur des chantiers ponctuels et prévus à l'avance, mais ne peut s'envisager en cas de situation cataclysmique où la disponibilité de plusieurs systèmes sur une même zone d'intervention peut s'avérer impossible à réaliser à l'échelle de plusieurs heures voire plusieurs jours.

On connait aussi des appareils d'éclairage autonomes légers constitués par des torches électriques à LEDs portées à une seule main et alimentées par batteries rechargeables ou non, permettant des éclairages relativement puissants. Mais ces systèmes ont une autonomie limitée liée au poids de la batterie pour un portage à la main. On retrouve de ce fait la plupart des inconvénients mentionnés dans l'état de la technique décrit ci-dessus.

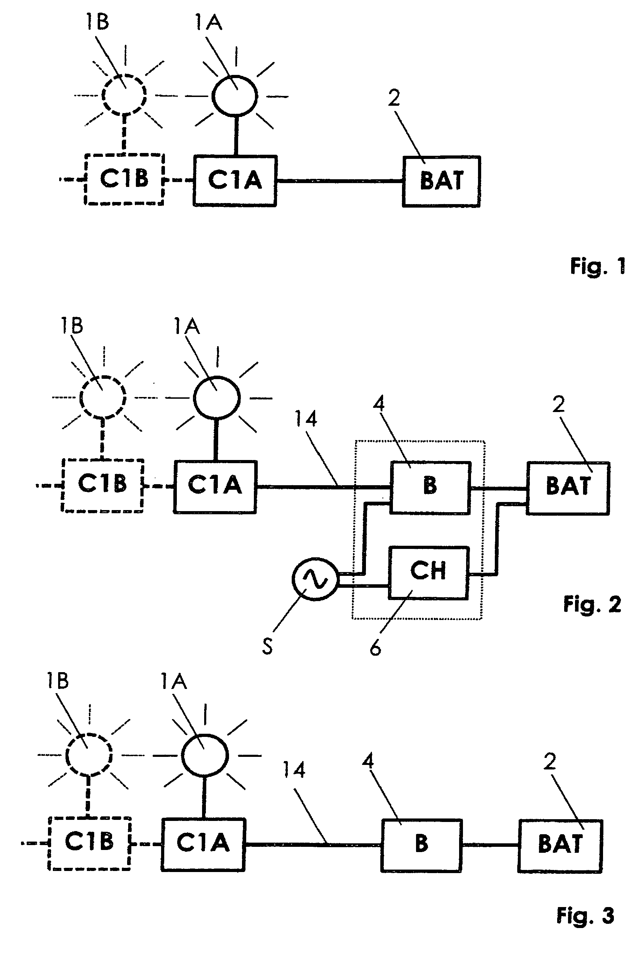

Un tel système est représenté par le schéma de la figure 1 illustrant l'état de l'art existant et selon lequel la source d'énergie constituée ici par une batterie rechargeable est directement connectée aux sources lumineuses par l'intermédiaire de convertisseurs d'énergie électrique tension/courant permettant d'adapter les caractéristiques tension/courant de la batterie rechargeable aux spécificités de fonctionnement en tension et/ou courant des sources lumineuses. Mais il n'y a pas de possibilité dans ce cas de disposer d'une gestion intelligente de l'éclairage, notamment au niveau de la durée d'éclairement.

Il est connu que des sources lumineuses telles que les lampes à LEDs ont, par ailleurs, trois avantages majeurs :
- celui d'un rendement lumineux très important (capables aujourd'hui de rendements supérieurs à 100 Lumens/Watt), identique voire supérieur à ceux des lampes au Xenon ou autres lampes à décharge,
- Un fonctionnement en basse tension,
- Une aptitude à la modulation de la puissance lumineuse par l'intermédiaire de convertisseurs d'énergie électrique tension/courant connus en soi branchés directement sur la source d'énergie, destinés à délivrer les caractéristiques tension/courant nécessaires à l'alimentation de la source lumineuse et aptes à exploiter une consigne (entre 0 et 100% par exemple), permettant de moduler cette puissance lumineuse, ce qui est quasiment impossible à obtenir avec les lampes à décharge.

La déposante a par ailleurs développé toute une gamme de batteries rechargeables de forte énergie pour utilisation professionnelle avec une gamme d'outils électroportatifs distincts possédant chacun leur propre caractéristique de fonctionnement, système décrit par exemple dans le document FR-2.920.683.

Dans le document GB 2 476 466 est décrit un dispositif d'éclairage portatif comprenant une batterie, des éléments pour déterminer la charge de la batterie, des LEDs comme sources lumineuses et un contrôleur pour contrôler la luminosité des LEDs. Les LEDs sont gérées en fonction de la charge de la batterie.

Dans le document US 2009/316392 est décrit un système d'éclairage composé d'une batterie, d'un boité de gestion électrique et d'un convertisseur alimentant les lampes. En fonction de la consigne d'éclairement et de la charge de la batterie, le boiter de gestion électrique change les temps de fonctionnement dans les différentes puissances d'éclairement. La charge de la batterie est monitorée d'après sa tension. Si la charge de la batterie baisse sous un certain niveau, la puissance d'éclairement est diminuée. En monitorant la charge de la batterie et en changeant la puissance d'éclairement en conséquence, la nouvelle durée d'éclairement aux différents niveaux de puissance est déterminée et réalisée.

Dans le document GB - 2 426 466 est décrit un dispositif de gestion de batterie pour un appareil d'éclairage portable.

Le dispositif de contrôle de batterie décrit dans ce document :
- ne comporte pas un boîtier de gestion électronique sur lequel se connectent à la fois la batterie, mais aussi une, voire plusieurs sources lumineuses ;
- ne comporte pas de dispositif configuré pour, pendant le fonctionnement du système, établir une phase d'éclairage principale par la programmation de la durée d'éclairage souhaitée, déterminant une puissance d'éclairement constante ;
- ne permet pas non plus la programmation d'une puissance d'éclairement constante déterminant la durée d'éclairage disponible.

Globalement, l'objet du dispositif décrit dans ce document, est de gérer la fin de vie de la batterie, solution bien connue par ailleurs. Dans le cas, par exemple, de la sélection d'un temps d'éclairage où l'utilisateur souhaite assurer une puissance d'éclairage constante, la batterie ne sera pas forcément en fin de vie, à la fin de ce temps, même en assurant la puissance maximale des lampes au cours de cette période.

Le dispositif décrit dans le document GB-2.426.466 se contente effectivement d'adapter la puissance lumineuse des leds en fonction de la fin de charge de la batterie, afin de préserver l'ensemble. On se trouve dans le cas typique et connu d'une lampe torche dont la luminosité décroit en fin de charge de sa batterie, sans toutefois que l'utilisateur ne maitrise cette durée. Le système décrit dans ce document fait communiquer en ce sens la source lumineuse intégrant un système de conversion d'énergie intelligent, et une batterie intégrant aussi son propre système intelligent. Il s'agit donc d'une lampe torche un peu sophistiquée qui ne fera qu'alerter l'utilisateur en fin de décharge de la batterie, sans que ce dernier ne puisse connaitre la durée le séparant du prochain point d'alerte.

Le système selon GB-2.426.466 ne comporte donc pas de boitier de gestion électronique intermédiaire capable de gérer et donc de communiquer à l'utilisateur la durée d'éclairage restant ou de moduler une puissance constante en fonction de la durée souhaitée par l'utilisateur, lui garantissant une luminosité constante durant ce temps.

Le document WO-2010 / 057138 divulgue un système d'économie d'énergie comprenant au moins une source de lumière alimentée par des panneaux solaires et/ou des batteries. Selon ce document, ce système gère l'énergie disponible, de manière active, et contrôle la puissance ou l'énergie livrée à la charge (load) de manière à permettre auxdites sources de lumière et/ou autres dispositifs, de fonctionner efficacement et d'approvisionner les utilisateurs même pendant les jours, semaines ou mois de faible luminosité solaire.

Les adaptations privilégiées contrôlent activement la charge de batterie et contrôlent activement la puissance délivrée à la charge, contrairement aux méthodes de contrôle conventionnelles où le système est passivement contrôlé par la charge. Ainsi, les modes de réalisations préférés évitent aux batteries du système de se vider au-dessous de leur seuil de bas régime, même en fonctionnant au cours des périodes prolongées de jours de faible ensoleillement, tandis que les méthodes de contrôle conventionnelles permettent à la charge d'utiliser plus d'énergie qu'il n'y en a de disponible dans le stockage du système/batterie et aboutit fréquemment à la mise hors tension (à l'arrêt) de la charge et endommage la batterie.

D'autre part, le dispositif décrit dans le document WO-2010/057138 lui, se propose de gérer un réseau de consommateurs électriques (lampadaires, feux rouges, bornes WiFi, ...) à partir de sources d'énergie telles que des panneaux solaires et des batteries rechargeables, en gérant les puissances délivrées selon un mécanisme prédictif en fonction de phénomènes tels que la luminosité ambiante, les effets jour/nuit selon les saisons ou les conditions climatiques sur la base de modèles mathématiques établis selon les historiques météo.

Le document WO-2010/057.138 ne décrit donc pas un système d'éclairage portable, mais on pourrait considérer qu'il comporte un boitier de gestion électronique comportant un système intelligent ayant pour souci de moduler les sources d'énergie afin d'assurer les priorités voire des énergies minimales aux différents consommateurs selon un modèle prédictif. Ce système intelligent ne cherche pas à garantir une puissance d'éclairage constante, par exemple durant un temps donné, puisque celle-ci dépend des autres consommateurs du réseau et des conditions météo. Ce système cherche par contre, comme celui décrit dans le document GB-2.426.466, à protéger la batterie contre les surcharges et surdécharges pouvant conduire à sa dégradation rapide dans le temps. Il s'agit d'une application stationnaire dont les caractéristiques de la batterie sont calculées avec de grandes marges de sécurité afin d'assurer un fonctionnement sur plusieurs années tout en tenant compte de modèles prédictifs basiques.

L' objet de l'invention est d'apporter une solution aux inconvénients de l'état de l'art antérieur mentionné ci-dessus en proposant un dispositif d'éclairage portable intelligent, puissant et durable, apte à être transporté par un seul homme, ce dispositif pouvant être facilement et rapidement installé sur les sites d'intervention et doté d'un boitier de gestion électronique permettant de gérer, en mode d'énergie autonome, la durée restante de la phase d'éclairement principale en fonction de la puissance d'éclairage installée, sans dégradation de l'éclairement souhaité dans la zone d'intervention et d'assurer, à la suite de ladite phase d'éclairement principale, une phase d'éclairement de sécurité de durée prédéterminée, lorsque la source d'énergie arrive à épuisement, assurant une dégradation progressive ou non de la puissance d'éclairement pendant un temps déterminé de façon à alerter les utilisateurs de la zone d'action et de leur donner le temps nécessaire à la mise en sécurité de ladite zone avant l'extinction complète de l'éclairage.

Selon l'invention, ce but est atteint grâce à un dispositif d'éclairage portable intelligent comprenant :
- au moins une source de lumière artificielle de forte puissance lumineuse, par exemple constituée par un projecteur à LEDs, ou, de préférence et avantageusement, plusieurs sources de lumière artificielle, cette source de lumière artificielle, ou chacune de ces sources de lumière artificielle, étant équipée(s), de manière connue en soi, d'un convertisseur d'énergie électrique tension/courant apte à moduler la puissance desdites sources de lumière selon une consigne donnée,
- une source d'énergie électrique autonome préférentiellement constituée par au moins une batterie rechargeable, pour alimenter en énergie électrique la ou les source(s) de lumière artificielle par l'intermédiaire des convertisseurs d'énergie électrique tension/courant,
ce dispositif étant remarquable en ce qu'il comprend encore un boitier de gestion électronique, comprenant au moins une unité de traitement numérique, telle que par exemple un microprocesseur, ou un microcontrôleur ou un processeur de signaux numériques, associée à des circuits annexes, et sur lequel se connectent le ou les convertisseur(s) d'énergie électrique de la ou des source(s) lumineuse(s), et la source d'énergie électrique autonome qui alimente notamment ledit boitier de gestion électronique, ce dernier étant configuré pour, pendant le fonctionnement du dispositif, établir une phase d'éclairement principale par la programmation de la durée d'éclairage souhaitée déterminant une puissance d'éclairement constante, ou la programmation d'une puissance d'éclairement constante déterminant la durée d'éclairage disponible.

Selon un mode d'exécution, le boitier de gestion électronique est configuré pour:
- communiquer avec la source d'énergie électrique autonome afin d'acquérir au minimum l'information de sa capacité résiduelle instantanée et/ou de mesurer les caractéristiques tension et/ou courant de ladite source d'énergie électrique autonome pour déterminer l'énergie résiduelle de ladite source d'énergie électrique autonome ;
- déterminer le nombre de sources lumineuses comprises dans le dispositif, par une mesure du courant pour une consigne de puissance d'éclairage donnée ;
- établir la consigne de puissance d'éclairage transmise au(x) convertisseur(s) d'énergie électrique tension/courant en fonction de l'énergie résiduelle de la source d'énergie électrique autonome, du nombre de sources lumineuses à alimenter et de la durée souhaitée de la phase d'éclairement principale, ou déterminer, périodiquement ou en continu, la durée d'éclairement disponible en fonction de l'énergie résiduelle de la source d'énergie électrique, du nombre de sources lumineuses à alimenter et de la puissance d'éclairage souhaitée de la phase d'éclairement principale.

Selon le mode d'exécution, le boitier de gestion électronique est configuré pour assurer, à l'expiration de la phase d'éclairement principale, une phase d'éclairement de sécurité définie par une durée prédéterminée pendant laquelle la consigne de puissance d'éclairage transmise au(x) convertisseur(s) d'énergie électrique tension/courant est dégradée, de façon linéaire ou non, pour garantir une puissance minimale d'éclairement pendant toute la phase d'éclairement de sécurité.

Selon le mode de réalisation, le boitier de gestion électronique est configuré pour permettre de réajuster la consigne de puissance d'éclairement des sources de lumière, en fonction des modifications par l'utilisateur de la durée d'éclairement souhaité ou pour réajuster, périodiquement ou en continu, la durée d'éclairement disponible en fonction des modifications par l'utilisateur de la consigne de puissance d'éclairement souhaitée, pendant la phase d'éclairement principale.

Suivant une disposition caractéristique, le boitier de gestion électronique est configuré pour permettre, à l'expiration de la phase d'éclairement de sécurité, un éclairage de très faible puissance jusqu'à l'extinction totale dudit dispositif.

Selon un mode de réalisation avantageux, le dispositif d'éclairage comporte des moyens de connexion au réseau de distribution électrique alternatif ou secteur, pour l'alimentation de la ou des sources de lumière artificielle, et le boitier de gestion électronique est configuré pour détecter la coupure accidentelle dudit secteur et basculer, de façon instantanée, l'alimentation des sources lumineuses du secteur sur la source d'énergie électrique autonome.

Selon un mode de réalisation préféré, le dispositif d'éclairage comprend un système de mesure de la quantité d'énergie restant dans la batterie.

Selon un mode d'exécution avantageux, le boitier de gestion électronique est configuré pour recevoir un ou plusieurs capteurs de luminosité intégrés au boitier ou déportés permettant de piloter la consigne de puissance lumineuse en fonction de l'éclairement souhaité au niveau du capteur, ou de la moyenne des éclairements mesurés par une pluralité de capteurs.

Selon un autre mode d'exécution, le boitier de gestion électronique est configuré pour détecter la présence ou l'absence de personnes dans la zone d'intervention au moyen d'un ou plusieurs capteurs de présence intégrés au boitier ou déportés, ledit boitier de gestion électronique ayant alors la capacité de réduire l'éclairement de la zone quand aucun mouvement n'est détecté et à revenir à l'éclairement initial quand une présence est à nouveau détectée. Ceci a notamment pour avantage intéressant de permettre d'économiser la consommation d'énergie en mode autonome ou non.

Selon un mode de réalisation avantageux, le boitier de gestion électronique est configuré pour alerter les personnes présentes dans la zone d'intervention, de la phase d'éclairement dégradée par des signaux sonores et/ou lumineux.

Selon un mode de réalisation, le dispositif d'éclairage comprend encore un chargeur de batterie pouvant être intégré au boitier de gestion électronique et chargeant la batterie quand le boitier est connecté au secteur.

Selon un autre mode de réalisation, le dispositif d'éclairage comprend encore un afficheur permettant d'afficher les paramètres de fonctionnement du dispositif, par exemple le niveau de la consigne d'éclairement, la luminance et la durée d'utilisation restante pour les phases d'éclairement principale et de sécurité.

Selon un autre mode d'exécution, la source d'énergie électrique autonome est pourvue d'un système de reconnaissance des caractéristiques électriques de la fonction d'éclairage intelligent, en tension et courant, permettant à ladite source d'énergie électrique autonome de prendre en compte ces caractéristiques pour assurer la sécurité de ladite source d'énergie électrique autonome.

Selon une autre disposition caractéristique, le dispositif d'éclairage portable est réalisé sous la forme d'une ou plusieurs unités d'éclairage, cette unité d'éclairage ou chacune des unités d'éclairage, comportant au moins deux projecteurs reliés en série, le boitier de gestion électronique étant connecté, d'une part, à l'un de ces projecteurs et, d'autre part, à la source d'énergie électrique.

Selon un mode d'exécution, les projecteurs de chaque unité d'éclairage, constitués par les luminaires intégrant les sources lumineuses, sont installés à la partie supérieure d'un lampadaire ou candélabre comprenant un mât supporté par un piètement.

Selon un autre mode de réalisation, le dispositif d'éclairage comprend au moins un projecteur conformé pour être tenu et dirigé à la main par l'utilisateur, le boitier de gestion électronique étant connecté, d'une part, audit projecteur et, d'autre part, à la source d'énergie électrique autonome, ledit boitier et ladite source d'énergie électrique autonome pouvant être portés par l'utilisateur par l'intermédiaire d'une ceinture ou d'un harnais, de sorte que le dispositif d'éclairage ainsi réalisé constitue une torche électrique intelligente et de forte autonomie.

L'invention procure de nombreux avantages ; elle met à la disposition des intervenants intéressés, un éclairage intelligent et puissant qui permet une gestion de la lumière dans le temps en toute sécurité et une réalisation sous forme d'un dispositif allégé (poids de l'ordre de 10 Kg à 15 Kg si on y ajoute le mât) immédiatement disponible et peu encombrant, ce qui réduit la pénibilité de son portage par un seul homme jusqu'au site d'utilisation.

En outre, le boitier de gestion électronique permet :
- une sélection de la durée d'éclairement souhaitée pendant la phase d'éclairement principale ayant pour conséquence le calcul, par le boitier de gestion électronique, de la consigne de puissance d'éclairage de l'ensemble des projecteurs reliés en série, afin de maintenir cette puissance pendant la durée choisie en tenant compte du nombre de projecteurs reliés et de l'énergie résiduelle contenue dans la ou les source(s) d'énergie électrique ;
- une sélection de la puissance d'éclairage souhaitée, ayant pour conséquence le calcul, par le boitier de gestion électronique, de la durée d'éclairage disponible pour la phase d'éclairage principale, ainsi que de la consigne de puissance d'éclairage de l'ensemble des projecteurs reliés en série, en tenant compte du nombre desdits projecteurs et de l'énergie résiduelle contenue dans la ou les source(s) d'énergie électrique ;
- la définition d'une phase d'éclairement de sécurité basée sur les paramètres définissant la phase d'éclairement principale, déclenchée à la fin de la durée d'éclairement de la phase principale et définie par une durée prédéfinie ayant pour conséquence la dégradation par le boitier de gestion électronique de la consigne de puissance d'éclairage transmise aux convertisseurs d'énergie électrique des sources lumineuses selon un modèle prédéfini ou progressivement, ou par palier, ou par pulses, de façon à garantir, au cours de cette durée, une puissance d'éclairage minimale prédéfinie elle aussi, ce qui permet aux intervenants présents dans la zone d'intervention de prendre les dispositions nécessaires et d'éviter une perte d'éclairement brutale ;

- une phase finale, déclenchée en fin de phase d'éclairement de sécurité, n'intervenant qu'en cas d'inaction préalable de l'utilisateur sur l'extinction finale du dispositif par l'intermédiaire d'un dispositif marche/arrêt, d'une durée indéfinie mais d'une puissance d'éclairage prédéterminée très faible aboutissant à l'épuisement de l'énergie disponible de la source d'énergie électrique ;
- une alerte des utilisateurs intervenant pendant toute la phase d'éclairement de sécurité sous la forme de signaux sonores et/ou lumineux ;
- un mode de gestion d'éclairage en fonction de la présence ou de l'absence de personnes dans la zone d'intervention déterminé par le ou les capteurs de présence ;
- un mode de gestion de l'éclairage en fonction de la luminosité perçue par le ou les capteur(s) de luminosité, celui-ci (ceux-ci) pouvant être fixé(s) sur l'unité d'éclairage ou sur l'une des unités d'éclairage ou déporté(s) à un endroit de référence de la zone d'intervention ;
- une limitation du nombre de projecteurs, par exemple alimentés par un système de by-pass au niveau de chaque projecteur ;
- une gestion de la charge de la batterie lorsque le dispositif d'éclairage est connecté au réseau.

Les buts, caractéristiques et avantages ci-dessus et d'autres encore ressortiront mieux de la description qui suit et des dessins annexés dans lesquels :
La figure 1 est une vue schématique illustrant l'état de la technique.
La figure 2 est vue schématique d'un exemple de réalisation d'une unité d'éclairage réalisée selon l'invention.
La figure 3 est une vue schématique d'un autre exemple de réalisation d'une unité d'éclairage réalisée selon l'invention.

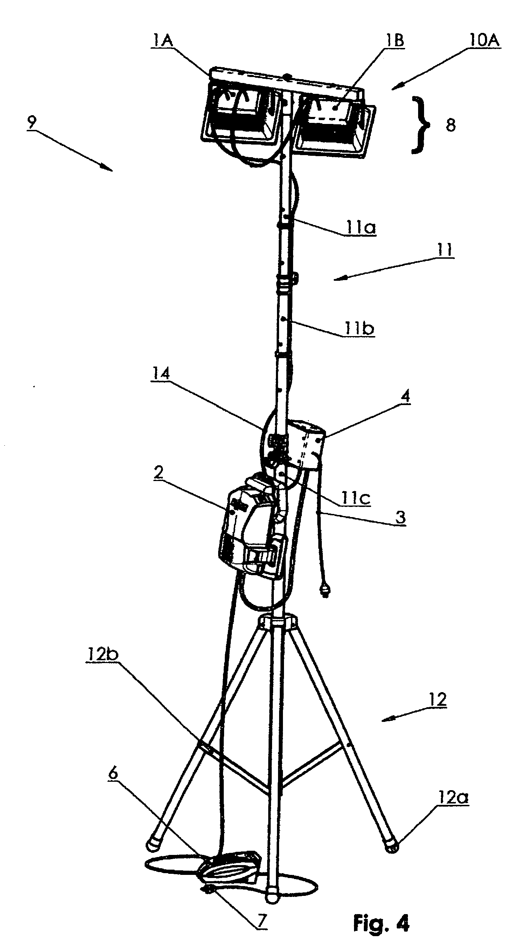

La figure 4 est une vue en perspective d'une telle unité d'éclairage.
La figure 5 est une vue en perspective illustrant une installation constituée de deux unités d'éclairage reliées en série.
La figure 6 est une vue en perspective représentant un exemple de réalisation du dispositif d'éclairage présenté en situation replié.
La figure 7 est une vue en perspective illustrant un exemple de réalisation du dispositif selon l'invention logé dans un sac permettant son transport par exemple à dos d'homme.
Les figures 8 et 9 sont des vues illustrant des exemples de gestion du dispositif d'éclairage sous la forme de diagrammes d'évolution de la puissance d'éclairage en fonction des durées disponibles.

On se reporte auxdits dessins pour décrire des exemples intéressants quoique nullement limitatifs de réalisation du dispositif d'éclairage portable intelligent selon l'invention.

Le dispositif d'éclairage portable selon l'invention comprend :
- au moins une source de lumière artificielle de forte puissance lumineuse 1A, par exemple constituée par un projecteur à LEDs, ou, de préférence et avantageusement, plusieurs sources de lumière artificielle 1A. 1 B, par exemple deux sources de lumière artificielle, équipées, chacune, de manière connue en soi, d'un convertisseur d'énergie électrique tension/courant C1A, C1B, apte à moduler la puissance desdites sources de lumière selon une consigne donnée ;
- une source d'énergie électrique autonome 2 constituée par une ou plusieurs batteries rechargeables, pour l'alimentation en énergie électrique de la ou des sources de lumière artificielle 1A, 1B par l'intermédiaire des convertisseurs d'énergie électrique tension/courant C1A, C1B ;

- un boitier de gestion électronique 4 relié, d'une part, à la source d'énergie électrique autonome 2 et, d'autre part, à au moins une source de lumière artificielle 1A, 1B, et sur lequel se connectent le ou les convertisseur(s) de la ou des source(s) lumineuse(s) C1A, C1B, et la source d'énergie électrique autonome 2 ; ce boitier de gestion électronique comprenant au moins une unité de traitement numérique, telle que microprocesseur, ou microcontrôleur, ou processeur de signaux numériques, associé à des circuits annexes, ledit boîtier de gestion électronique 4 étant apte et configuré pour communiquer avec la source d'énergie autonome 2 afin d'acquérir l'information de la capacité résiduelle instantanée de cette dernière ou mesurer les caractéristiques tension ou courant de ladite source autonome pour déterminer l'énergie résiduelle instantanée de celle-ci, ledit dispositif étant notamment remarquable en ce que ledit boîtier de gestion électronique 4 est configuré :
- pour déterminer une consigne d'éclairement principal présentant une puissance d'éclairement constante P1 à partir de la programmation d'une durée d'éclairage souhaitée T1, ou pour déterminer une consigne de durée d'éclairage T1 à partir de la programmation d'une puissance d'éclairement constante désirée P1 ; et
- pour réajuster, à tout moment, la consigne d'éclairement principale programmée P1, pendant la phase d'éclairement principale, afin d'établir une nouvelle consigne de puissance d'éclairage transmise au(x) convertisseur(s) d'énergie électriques tension/courant C1 A, C1B, ..., en fonction de l'énergie résiduelle de la source d'énergie électrique autonome 2 et de la durée d'éclairement principale programmée ; ou
- pour déterminer, à tout moment, une nouvelle durée d'éclairement, en fonction de l'énergie résiduelle de la source d'énergie électrique autonome et de la puissance d'éclairement souhaitée.

Selon un mode d'exécution, le boitier de gestion électronique 4 est encore configuré pour :
- communiquer avec la source d'énergie électrique autonome 2 pour acquérir au minimum l'information de sa capacité résiduelle instantanée et/ou mesurer les caractéristiques tension et/ou courant de ladite source d'énergie électrique autonome pour déterminer l'énergie résiduelle de cette dernière ;
- déterminer le nombre de sources lumineuses (1A, 1B, ...) comprises dans le dispositif, par une mesure du courant pour une consigne de puissance d'éclairage et une puissance nominale des sources lumineuses données ;
- établir, pour la phase d'éclairement principale en fonction du nombre de projecteurs connectés et de l'énergie résiduelle de la source d'énergie électrique autonome 2, la consigne de puissance d'éclairage transmise aux convertisseurs d'énergie électrique tension/courant pour aboutir à la puissance d'éclairage P1 pendant la durée souhaitée T1, ou déterminer la durée d'éclairement disponible T1, si l'utilisateur souhaite définir la puissance d'éclairage à la valeur P1.

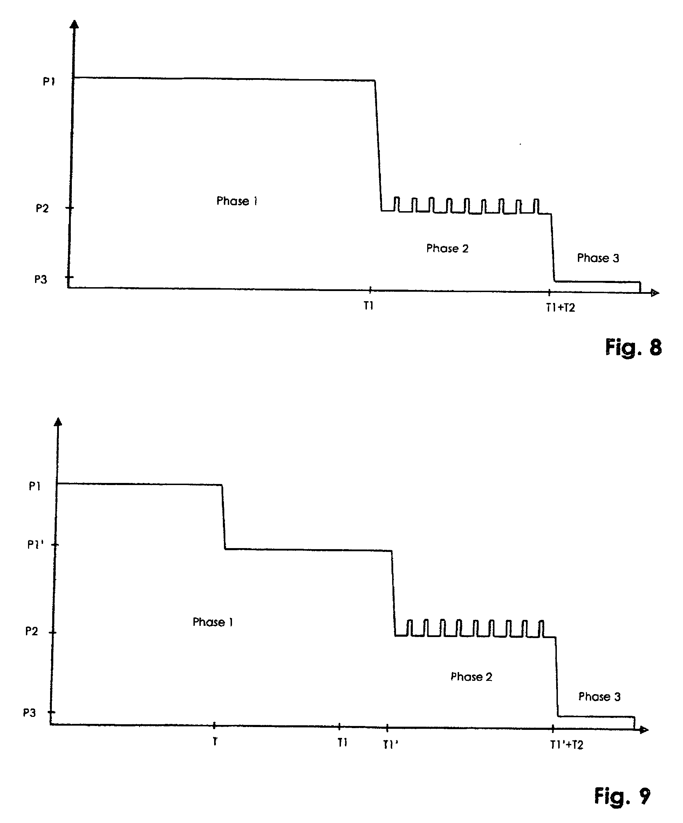

Selon un autre mode d'exécution avantageux, le boitier de gestion électronique est configuré pour assurer, à l'expiration de la phase d'éclairement principale T1, une phase d'éclairement de sécurité définie par une durée prédéterminée T2 pendant laquelle la consigne de puissance d'éclairage transmise aux convertisseurs d'énergie électrique tension/courant est dégradée de façon linéaire ou non, par exemple sous forme pulsée comme illustré dans les exemples des figures 8 et 9, tout en garantissant une puissance d'éclairage minimale P2 pendant toute la durée T2.

Selon l'exemple illustré à la figure 8, l'utilisateur détermine une consigne de durée T1 dont il a besoin pour réaliser ses travaux sur la zone d'intervention, et le boitier de gestion électronique lui alloue une puissance P1 pour toute la durée T1 de la phase d'éclairement principale, ou phase 1.

Respectivement, l'utilisateur peut aussi déterminer une consigne de puissance d'éclairement correspondant à la puissance d'éclairage P1 dont il a besoin pour réaliser ses travaux sur la zone d'intervention, et le boitier de gestion électronique lui indique alors la durée T1 disponible correspondant à la phase d'éclairement principale.

Selon un mode de réalisation avantageux, le boitier de gestion électronique 4 est configuré pour permettre de réajuster la consigne de puissance d'éclairement des sources de lumière, en fonction des modifications de la durée d'éclairement souhaitée ou pour réajuster la durée d'éclairement disponible en fonction des modifications de la consigne de puissance d'éclairement souhaitée, pendant la phase d'éclairement principale.

Ainsi, comme illustré à la figure 9, l'utilisateur peut intervenir à tout moment (ici au bout d'un temps T) sur le dispositif d'éclairage, pendant la phase d'éclairement principale, pour modifier soit la consigne de durée, de T1 à T1' permettant alors au boitier de gestion électronique d'établir P1', soit la consigne de puissance de P1 à P1', permettant alors au boitier de gestion électronique de recalculer la durée d'éclairement disponible, ici T1' :
- dans le cas où l'utilisateur modifie la consigne de durée, par exemple en indiquant une durée T1' supérieure à la durée initialement déterminée T1, le boitier de gestion réajuste la puissance d'éclairement disponible en attribuant une puissance P1' inférieure à P1, puissance initialement allouée ;
- de même, dans le cas où l'utilisateur modifie la consigne de puissance, par exemple en indiquant une puissance P1' inférieure à la puissance initialement déterminée P1, le boitier de gestion réajuste la durée d'éclairement disponible en attribuant une durée T1' supérieure à T1, durée initialement allouée.

A l'expiration de la phase d'éclairement principale T1, ou T1' en cas de réajustement, le boitier de gestion électronique déclenche la phase d'éclairement dégradé (ou phase 2 sur les figures 8 et 9) correspondant à une durée T2 de sécurité pendant laquelle l'utilisateur est assuré d'avoir un éclairement de puissance minimale P2 correspondant à la phase d'éclairement dégradé.

Cette durée T2 et cette puissance P2 sont des paramètres qui sont configurés par défaut dans ce mode de réalisation particulier, mais ils peuvent aussi être déterminés au préalable par l'utilisateur avec une version spécifique du logiciel intégré au boitier de gestion électronique.

Suivant une autre disposition caractéristique, le boitier de gestion électronique est configuré pour permettre, à l'expiration de la phase d'éclairement dégradé (phase 2), une phase ultime de sécurité d'éclairage de très faible puissance d'éclairage P3, de durée non déterminée (phase 3 sur les figures 8 et 9) et précédant l'extinction totale dudit dispositif. Cette extinction totale interviendra alors à l'épuisement complet de l'énergie de la source d'énergie électrique autonome 2.

Les sources lumineuses 1A, 1 B sont avantageusement constituées par des projecteurs de forte puissance lumineuse, à faible consommation en énergie électrique et aptes à la modulation de leur puissance lumineuse, tels que des projecteurs à LEDs. Ces projecteurs, par exemple constitués par des luminaires ou lanternes, comprennent des modules à LEDs interchangeables capables d'émettre des flux lumineux de forte puissance, par exemple de l'ordre de 14 000 lumens ou plus.

La source d'énergie électrique autonome est constituée par une/des batterie(s) rechargeable(s) 2, en particulier et avantageusement par des batteries au lithium-ion ou par des batteries au lithium-polymère.

De manière avantageuse, la source d'énergie électrique autonome 2 est pourvue d'un système de reconnaissance des caractéristiques électriques de la fonction d'éclairage intelligent, en tension et courant, permettant à ladite source d'énergie électrique autonome de prendre en compte ces caractéristiques pour assurer la sécurité de ladite source d'énergie électrique autonome.

Le boitier 4 de gestion électronique est également configuré pour :
- mesurer la puissance d'éclairement des sources de lumière en fonction des informations transmises par le ou les capteurs de luminosité,
- définir la puissance d'éclairement des sources de lumière,
- établir la consigne de puissance d'éclairement vers le ou les convertisseurs d'énergie électrique tension/courant (C1A, C1B, ...) leur permettant de moduler la puissance de la ou des source(s) lumineuse(s) (1A, 1B, ...) en limitant la consommation en énergie électrique provenant de la source d'énergie électrique autonome 2.

Selon un autre mode d'exécution, le boitier de gestion électronique est configuré pour définir la durée restante d'éclairement en phase principale, selon les besoins d'éclairement définis.

Selon un autre mode de réalisation, le boitier de gestion électronique 4 est configuré pour définir la durée restante d'éclairement en phase dégradée lorsque le boitier de gestion électronique détermine que la source d'énergie arrive à épuisement.

Selon un mode de réalisation avantageux, le boitier de gestion électronique est configuré pour alerter les personnes présentes dans la zone d'intervention, de la phase d'éclairement dégradée. Ce moyen d'alerte peut être par exemple constitué simplement par la diminution de la puissance d'éclairage P2 lors de l'entrée en phase d'éclairement dégradé, ou alors l'utilisateur peut déterminer des modalités de fonctionnement de l'éclairement de la phase dégradée pour avoir une consigne de puissance P2 et donc un éclairement en dents de scie (voir figures 8 et 9).

Selon un autre mode d'exécution, ce moyen d'alerte peut être constitué par un avertisseur sonore et/ou un voyant lumineux intégré au boitier de gestion électronique.

Selon un mode de réalisation avantageux, le dispositif d'éclairage comporte des moyens de connexion au réseau de distribution électrique ou secteur, pour l'alimentation de la ou des sources de lumière artificielle, et le boitier de gestion électronique est configuré pour basculer, par exemple instantanément, l'alimentation des sources lumineuses du secteur à la batterie en cas de coupure accidentelle dudit secteur, lorsque le dispositif d'éclairage selon l'invention est alimenté par ce dernier.

Les différents composants du boitier de gestion électronique peuvent être intégré(s) ou non dans un même boîtier. Ce boîtier est avantageusement réalisé dans un matériau bon conducteur thermique, par exemple en aluminium, pour permettre d'évacuer les calories générées notamment par le chargeur.

Le boitier de gestion électronique intègre encore :
- des moyens de mise en marche/arrêt du dispositif, par exemple un bouton ON/OFF ;
- des moyens permettant d'ajuster la durée d'éclairement souhaitée, par exemple des touches +/- ;
- des moyens d'affichage, par exemple un afficheur, pour informer l'utilisateur des principaux paramètres de fonctionnement du dispositif, par exemple du niveau de la consigne d'éclairement, du nombre d'heures et/ou de minutes disponibles dans la phase d'éclairement en cours, de la luminance mesurée par les capteurs de luminosité, en fonction du nombre de projecteur, du niveau d'éclairage et de la quantité d'énergie disponible dans les batteries.

Le boitier électronique de gestion 4 est relié à l'un des projecteurs du dispositif par un câble 14 pour l'alimentation dudit projecteur.

De manière connue en soi, les consignes peuvent être générées vers les convertisseurs d'énergie électrique tension/courant, par un signal évoluant de façon continue par exemple entre les valeurs 0 et 1, 0 définissant l'extinction (soit 0% de la puissance d'éclairage) et 1 définissant 100% de la puissance d'éclairage. Cette consigne peut ensuite être exploitée au niveau des sources lumineuses par une alimentation en mode PWM (Pulse Width Modulation).

Il est rappelé que, de manière connue en soi, les consignes de puissance d'éclairage transmises aux convertisseurs d'énergie tension/courant des sources lumineuses peuvent être transmises :
- en mode numérique, par exemple en mode PWM mentionné ci-dessus où le boitier de gestion électronique, pour un pourcentage de puissance d'éclairage donné (par exemple 25%), génère, à une fréquence supérieure à la rémanence rétinienne de l'oeil humain, des séquences de commande où la source lumineuse devra être allumée à pleine puissance tout d'abord pendant le pourcentage du temps de cette séquence correspondant au pourcentage de la consigne de puissance (25% dans l'exemple choisi) puis éteint le reste du temps (75% dans l'exemple choisi) ;
- et/ou en mode analogique : dans ce cas, le boitier de gestion électronique génère un signal de tension constant pour un pourcentage de puissance d'éclairage donné compris entre un niveau bas (par exemple 0 Volt) et un niveau haut (par exemple 5 Volts) où le pourcentage de la consigne de puissance d'éclairage correspondra à la valeur de tension de niveau bas ajoutée au pourcentage de la différence de tension entre le niveau haut et le niveau bas (dans notre exemple, on aurait, pour une puissance d'éclairage souhaitée de 25% une consigne de tension transmise aux convertisseurs de 1,25 Volts).

Les moyens 3 de connexion au réseau de distribution électrique pour l'alimentation en énergie électrique, de la ou des sources de lumière 1A, 1B sont constitués par un câble muni d'un connecteur connu en soi.

Selon un mode d'exécution avantageux, le boitier de gestion électronique 4 est configuré pour recevoir un ou plusieurs capteurs de luminosité intégrés au boitier ou déportés permettant de piloter la consigne de puissance lumineuse en fonction de l'éclairement souhaité au niveau du capteur, ou de la moyenne des éclairements mesurés par une pluralité de capteurs et ainsi d'adapter l'éclairage des projecteurs 1 A, 1 B à l'éclairage naturel extérieur.

Selon une autre disposition caractéristique avantageuse, le système d'éclairage portable de l'invention comprend un chargeur de batterie 6, connu en soi, et des moyens de raccordement 7 permettant de le connecter à la ou aux batterie(s) rechargeable(s) 2 et au secteur, respectivement, pour recharger la ou les batterie(s) 2, lorsque le secteur est disponible sur le site d'intervention.

Lorsque le dispositif d'éclairage est connecté au secteur, les batteries rechargeables constituant la source d'énergie électrique autonome 2 reliées au chargeur 6 se chargent et s'autogèrent. Si une coupure de courant électrique survient, le boitier de gestion électronique 4 interrompt automatiquement la liaison électrique des sources lumineuses 1A, 1B avec le secteur S et connecte lesdites sources lumineuses à ladite source d'énergie électrique autonome.

Les batteries rechargeables peuvent aussi être rechargées par des modules photovoltaïques.

Selon un mode d'exécution préféré, le dispositif d'éclairage selon l'invention comprend un ou des capteurs de présence permettant de détecter la présence ou l'absence de personnes dans la zone d'intervention, de sorte à adapter la puissance de l'éclairage à la présence ou non de personnes sur ladite zone d'intervention. Ces capteurs peuvent être intégrés au boitier ou déportés, ledit boitier de gestion électronique ayant alors la capacité de réduire l'éclairement de la zone quand aucun mouvement n'est détecté et à revenir à l'éclairement initial quand une présence est à nouveau détectée. Ceci a notamment pour avantage intéressant de permettre d'économiser la consommation d'énergie en mode autonome ou non.

Selon un autre mode d'exécution, le dispositif d'éclairage comprend un système de mesure de la quantité d'énergie électrique restant disponible dans la source d'énergie électrique autonome, ce système permettant de connaître, à tout moment, cette quantité restante. Le dispositif d'éclairage comporte, par exemple, un moyen d'alerte de type visuel ou sonore, connu en soi, relié à la source d'énergie électrique autonome et recevant des informations dudit système de mesure, par exemple un dispositif fonctionnant par émission de flashs de lumière peut être prévu pour informer les intervenants que la source d'énergie électrique autonome possède seulement quelques minutes d'autonomie permettant un éclairage au moyen de l'énergie électrique générée par cette dernière.

De préférence, le système d'éclairage comprend encore :
- un dispositif d'acquisition des commandes du système ;
- des moyens autorisant la modulation de la puissance, par exemple constitués par un gradateur permettant d'augmenter ou de diminuer la puissance lumineuse,
- des moyens permettant de moduler la durée d'éclairement souhaitée.

Ces commandes sont situées sur le boitier de gestion électronique 4 mais pourraient également être pilotées à distance par exemple par un boitier de télécommande.

Selon une autre disposition caractéristique, le dispositif d'éclairage selon l'invention est réalisé sous la forme d'une ou plusieurs unités d'éclairage 10A, 10B, cette unité d'éclairage ou chacune des unités d'éclairage, comportant au moins deux projecteurs 1A, 1B reliés en série, le boitier de gestion électronique 4 étant connecté, d'une part, à l'un de ces projecteurs 1A et, d'autre part, à la source d'énergie électrique 2 ou 3.

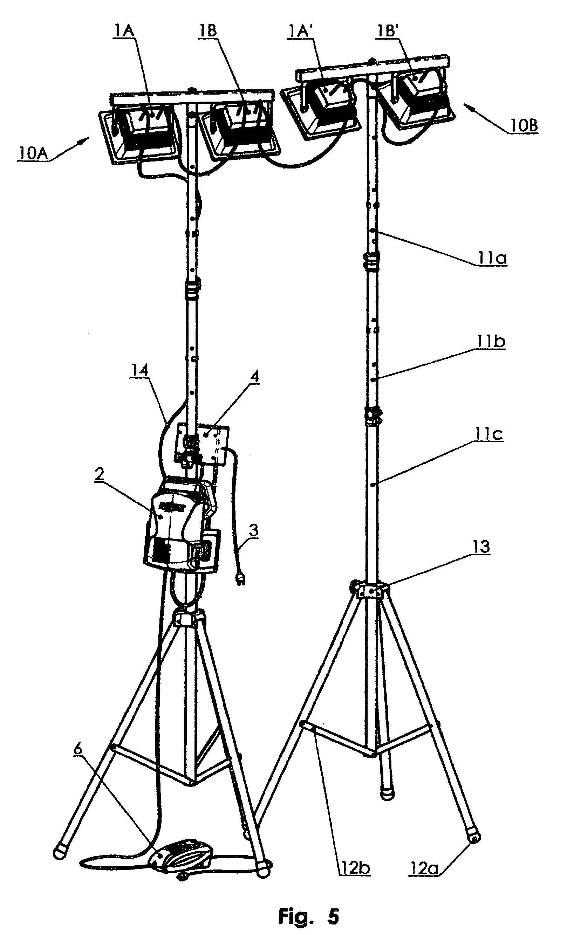

Suivant l'exemple représenté à la figure 5, l'installation d'éclairage comprend deux unités d'éclairage 10A, 10B comportant chacune deux projecteurs 1A, 1B ou 1A', 1B'. Seul, l'un des projecteurs (1A) appelé "projecteur-maître" de l'une des unités d'éclairage (unité d'éclairage 10A selon le dessin annexé) est connecté au boitier de gestion électronique 4. Le second projecteur (1B) de cette unité d'éclairage appelé "projecteur-esclave" est connecté en série, d'une part, au premier projecteur de ladite unité et, d'autre part, également connecté en série aux autres projecteurs 1A', 1B' aussi appelés "projecteurs-esclaves" de la seconde unité d'éclairage 10B. Ainsi, chaque projecteur supplémentaire ajouté au dispositif d'éclairage sera branché en série sur le dernier projecteur déjà branché audit dispositif.

Selon un mode d'exécution, la tête d'éclairage incluant les projecteurs de chaque unité d'éclairage (10A, 10B, ...), constitués par les luminaires intégrant les sources lumineuses (1A, 1B ; 1A', 1B', ...), est installée à la partie supérieure d'un lampadaire ou candélabre 9 comprenant un mât 11 supporté par un piètement 12.

Le mât 11 peut être constitué de deux ou de plus de deux tronçons, par exemple trois tronçons 11a, 11 b, 11 c, assemblés de manière télescopique et démontable de façon à permettre un réglage aisé et rapide de sa hauteur et son démontage autorisant son transport et son rangement sous un volume réduit. Dans ce cas, le mât est équipé de moyens de blocage connus en soi pour immobiliser les tronçons 11a, 11b, 11 c dans une position correspondant à la hauteur désirée.

Les candélabres 9 présentent, par exemple, une hauteur de 3 à 5 m, permettant de placer la tête d'éclairage 8 constituée par les projecteurs à une distance du sol correspondant sensiblement à cette hauteur.

On souligne toutefois que les projecteurs pourraient, dans certains cas, être installés à faible distance du sol sur des ossatures porteuses de hauteur réduite.

Le piètement 12 peut être du type articulé et déployable, connu en soi, et agencé pour occuper deux configurations possibles :
- une conformation déployée selon laquelle il forme un trépied dont les extrémités d'appui au sol 12a sont espacées de 120°, les pieds de ce trépied sont, d'une part, reliés entre eux au moyen de biellettes 12b et d'articulations, et sont fixés, d'autre part, à une bague 13 disposée au-dessus de la base du mât et montée avec une aptitude de coulissement sur la portion inférieure dudit mât, cette bague étant munie d'un organe de blocage (figure 5) ;
- une configuration repliée, les pieds étant rapprochés et disposés autour de la portion inférieure du mât et disposés dans le prolongement de celui-ci.

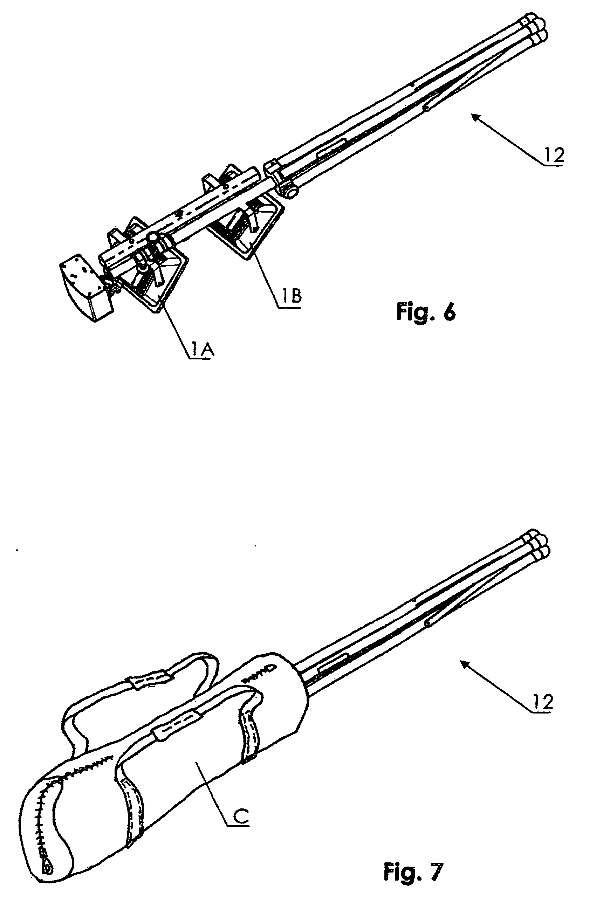

De manière avantageuse, le dispositif d'éclairage selon l'invention constitué au moins d'une source lumineuse 1A, d'une batterie 2 et d'un boitier de gestion électronique 4 peut être portés par un seul homme, une fois complètement replié (voir figures 6 et 7), par exemple la source lumineuse portée à la main dans un sac C et l'ensemble batterie 2 - boitier de gestion électronique 4 portés sur le dos.

Selon un autre mode de réalisation, le dispositif d'éclairage comprend au moins un projecteur 1A conformé pour être tenu et dirigé à la main par l'utilisateur, le boitier de gestion électronique 4 étant connecté, d'une part, audit projecteur et, d'autre part, à la source d'énergie électrique autonome 2, ledit boitier et ladite source d'énergie électrique autonome pouvant être portés par l'utilisateur par l'intermédiaire d'une ceinture ou d'un harnais, de sorte que le dispositif d'éclairage ainsi réalisé constitue une torche électrique intelligente et de forte autonomie.

On comprend que le dispositif d'éclairage portable intelligent selon l'invention peut avoir des applications intéressantes dans des domaines d'activités différents ; par exemple, il peut être utilisé :
- pour des interventions de secours sur des lieux d'accident,
- pour des interventions de sauvetage de personnes,
- pour l'éclairage de chantiers,
- pour des interventions de sécurité effectuées par les pompiers ou par les forces de l'ordre,
- pour l'éclairage d'aires de jeux, etc.

## Revendications

1. Dispositif d'éclairage portable intelligent comprenant :
- au moins une source de lumière artificielle (1A) de forte puissance lumineuse, ou plusieurs sources de lumière artificielle (1 A, 1B, ...) de forte puissance lumineuse, cette source de lumière artificielle (1A) ou chacune de ces sources de lumière artificielle (1A, 1B, ...,) étant équipée(s), d'un convertisseur d'énergie électrique tension/courant (C1A, C1B, ...) apte à moduler la puissance desdites sources de lumière selon une consigne donnée,
- une source d'énergie électrique autonome (2) constituée par au moins une batterie rechargeable pour l'alimentation de la ou des source(s) de lumière artificielle, par l'intermédiaire des convertisseurs d'énergie électrique tension/courant,
- un boitier de gestion électronique (4) comprenant au moins une unité de traitement numérique associée à des circuits annexes et connectée, d'une part, à la source d'énergie électrique autonome (2), et, d'autre part, au ou aux convertisseurs (C1A, C1B, ...) de la ou des source(s) de lumière artificielle (1a, 1B, ...) ledit boîtier de gestion électronique (4) étant configuré pour communiquer avec la source d'énergie autonome (2) pour acquérir l'information de la capacité résiduelle instantanée de cette dernière ou mesurer les caractéristiques tension ou courant de ladite source d'énergie autonome pour déterminer l'énergie résiduelle instantanée de cette dernière ;
**caractérisé en ce que** ledit boîtier de gestion électronique (4) est configuré :
- pour déterminer une consigne d'éclairement principal présentant une puissance d'éclairement constante (P1) à partir de la programmation d'une durée d'éclairage souhaitée (T1), ou pour déterminer une consigne de durée d'éclairage (T1) à partir de la programmation d'une puissance d'éclairement constante désirée (P1) ; et
- pour réajuster, à tout moment, la consigne d'éclairement principal programmée (P1), lorsque l'utilisateur change une consigne de durée d'éclairement ou de puissance d'éclairement pendant la phase d'éclairement principale, afin d'établir :
o une nouvelle consigne de puissance d'éclairage transmise au(x) convertisseur(s) d'énergie électriques tension/courant (C1A, C1B, ...), en fonction de l'énergie résiduelle de la source d'énergie électrique autonome (2) et de la durée d'éclairement principale programmée, lorsque l'utilisateur change la consigne de durée d'éclairement ; ou
o une nouvelle durée d'éclairement, en fonction de l'énergie résiduelle de la source d'énergie électrique autonome et de la puissance d'éclairement souhaitée, lorsque l'utilisateur change une consigne de puissance d'éclairement.

2. Dispositif d'éclairage portable intelligent selon la revendication 1, **caractérisé en ce que** le boitierde gestion électronique (4) est configuré pour :
- déterminer le nombre de sources lumineuses (1A, 1B, ...) comprises dans le dispositif, par une mesure du courant pour une consigne de puissance d'éclairage donnée ;
- établir la consigne de puissance d'éclairage transmise au(x) convertisseur(s) d'énergie électrique tension/courant (C1A, C1B, ...) en fonction de l'énergie résiduelle de la source d'énergie électrique autonome (2), et du nombre de sources lumineuses à alimenter, ou déterminer, périodiquement ou en continu, la durée d'éclairement disponible en fonction de l'énergie résiduelle de la source d'énergie électrique, et du nombre de sources lumineuses à alimenter (C1A, C1B, ...).

3. Dispositif d'éclairage portable intelligent selon l'une des revendications 1 ou 2, **caractérisé en ce que** le boitier de gestion électronique est configuré pour assurer, à l'expiration de la phase d'éclairement principale, une phase d'éclairement de sécurité définie par une durée prédéterminée (T2) pendant laquelle la consigne de puissance d'éclairage transmise au(x) convertisseur(s) d'énergie électrique tension/courant est dégradée, de façon linéaire ou non, pour garantir une puissance minimale (P2) d'éclairement pendant toute la phase d'éclairement de sécurité.

4. Dispositif d'éclairage portable intelligent selon l'une quelconque des revendications 1 à 3, **caractérisé en ce que** le boitier de gestion électronique (4) est configuré pour permettre de réajuster, périodiquement ou en continu, la consigne de puissance d'éclairement des sources de lumière, en fonction des modifications du temps d'éclairement souhaité, ou pour réajuster la durée d'éclairement disponible en fonction des modifications de la consigne de puissance d'éclairement souhaitée, pendant la phase d'éclairement principale.

5. Dispositif d'éclairage portable intelligent selon l'une quelconque des revendications 1 à 4, **caractérisé en ce que** le boitier de gestion électronique (4) est configuré pour permettre, à l'expiration de la phase d'éclairement de sécurité, un éclairage de très faible puissance (P3) jusqu'à l'extinction totale dudit dispositif.

6. Dispositif d'éclairage portable intelligent selon l'une quelconque des revendications 1 à 5, **caractérisé en ce qu'**il comporte des moyens (3) de connexion au réseau de distribution électrique alternatif ou secteur (S) pour l'alimentation de la ou des sources de lumière artificielle (1A, 1B, ...), et **en ce que** le boitier de gestion électronique (4) est configuré pour détecter une coupure accidentelle dudit secteur et basculer l'alimentation des sources lumineuses (1A, 1B, ...) du secteur (3) à la source d'énergie électrique autonome (2).

7. Dispositif d'éclairage portable intelligent selon l'une quelconque des revendications 1 à 6, **caractérisé en ce qu'**il comprend un système de mesure de la quantité d'énergie restant dans la batterie (2).

8. Dispositif d'éclairage portable intelligent selon l'une quelconque des revendications 1 à 7, **caractérisé en ce que** un ou des capteur(s) de luminosité sont reliés au boitier de gestion électronique (4) ou déportés et permettent de piloter la consigne de puissance lumineuse en fonction de l'éclairement souhaité au niveau du capteur, ou de la moyenne des éclairements mesurés par une pluralité de capteurs, et ainsi d'adapter l'éclairage des projecteurs (1 A, 1 B, ...) à l'éclairage naturel extérieur.

9. Dispositif d'éclairage portable intelligent selon l'une quelconque des revendications 1 à 8, **caractérisé en ce que** le boitier de gestion électronique (4) est configuré pour définir la durée restante d'éclairement en phase principale, selon les besoins d'éclairement définis.

10. Dispositif d'éclairage portable intelligent selon l'une quelconque des revendications 1 à 9, **caractérisé en ce que** le boitier de gestion électronique (4) est configuré pour définir la durée restante d'éclairement en phase dégradée lorsque ledit boitier détermine que la source d'énergie arrive à épuisement.

11. Dispositif d'éclairage portable intelligent selon l'une quelconque des revendications 1 à 10, **caractérisé en ce qu'**il comprend des capteurs de présence intégrés au boitier de gestion électronique (4) ou déportés, permettant de détecter la présence ou l'absence de personnes dans la zone d'intervention, et **en ce que** le boitier de gestion électronique est configuré pour réduire l'éclairement de la zone d'intervention quand aucun mouvement n'est détecté et à revenir à l'éclairement initial quand une présence est à nouveau détectée.

12. Dispositif d'éclairage portable intelligent selon la revendication 11, **caractérisé en ce qu'**il comporte un moyen d'alerte de type visuel ou sonore connu en soi, relié à la batterie et recevant des informations dudit système de mesure, et **en ce que** le boitier de gestion électronique (4) est configuré pour alerter les personnes présentes dans la zone d'intervention, de la phase d'éclairement dégradée, par des signaux sonores et/ou lumineux.

13. Dispositif d'éclairage portable intelligent selon l'une quelconque des revendications 1 à 12, **caractérisé en ce que** le dispositif d'éclairage intelligent comprend un chargeur de batterie (6) et des moyens de connexion de celui-ci à la ou aux batteries rechargeables et au secteur, pour recharger la ou lesdites batteries lorsque le secteur est disponible.

14. Dispositif d'éclairage portable intelligent selon l'une quelconque des revendications 1 à 13, **caractérisé en ce qu'**il comporte un afficheur permettant d'afficher le niveau de la consigne d'éclairement, la luminance et la durée d'utilisation restante pour les phases d'éclairement principale et de sécurité.

15. Dispositif d'éclairage portable intelligent selon l'une quelconque des revendications 1 à 14, **caractérisé en ce que** la ou les sources de lumière artificielle est/sont constituée(s) par des projecteurs de forte puissance lumineuse et à faible consommation, tels que des projecteurs à LEDs.

16. Dispositif d'éclairage portable intelligent selon l'une quelconque des revendications 1 à 15, **caractérisé en ce que** la source autonome d'énergie électrique (2) est constituée par des batteries rechargeables, en particulier par des batteries au lithium-ion ou par des batteries au lithium-polymère.

17. Dispositif d'éclairage portable intelligent selon l'une quelconque des revendications 1 à 16, **caractérisé en ce que** la source d'énergie électrique autonome (2) est pourvue d'un système de reconnaissance des caractéristiques électriques de la fonction d'éclairage intelligent, en tension et courant, permettant à ladite source d'énergie électrique autonome de prendre en compte ces caractéristiques pour assurer la sécurité de ladite source d'énergie électrique autonome.

18. Dispositif d'éclairage portable intelligent selon l'une quelconque des revendications 1 à 17, **caractérisé en ce que** le dispositif d'éclairage portable est réalisé sous la forme d'une ou plusieurs unités d'éclairage (10A, 10B), cette unité d'éclairage ou chacune des unités d'éclairage, comportant au moins deux projecteurs (1A, 1B ; 1A', 1B') reliés en série, le boitier de gestion électronique (4) étant connecté, d'une part, à l'un de ces projecteurs (1A) et, d'autre part, à la source d'énergie électrique (2, 3).

## Patentansprüche

1. intelligente tragbare Beleuchtungsvorrichtung umfassend:
- mindestens eine künstliche Lichtquelle (1A) mit starker Leuchtkraft oder mehrere künstliche Lichtquellen (1A, 1B, ...) mit starker Leuchtkraft, wobei diese künstliche Lichtquelle (1A) oder jede dieser künstlichen Lichtquellen (1A, 1B, ...) mit einem elektrischen Energiewandler des Typs Spannungs-Strom-Wandler (C1A, C1B, ...) ausgestattet ist, der geeignet ist, die Kraft der genannten Lichtquellen entsprechend einer gegebenen Anweisung zu modulieren,
- eine autonome Stromquelle (2) bestehend aus mindestens einer aufladbaren Batterie zur Stromversorgung der künstlichen Lichtquelle(n) über die elektrischen Energiewandler des Typs Spannungs-Strom-Wandler,
- ein elektronisches Steuergerät (4) umfassend mindestens eine digitale Verarbeitungseinheit, die mit Hilfsstromkreisen verbunden ist und die einerseits an die autonome Stromquelle (2) und andererseits an den oder die Energiewandler (C1A, C1B, ...) der künstlichen Lichtquelle(n) (1A, 1B, ...) angeschlossen ist, wobei das genannte elektronische Steuergerät (4) konfiguriert ist, um mit der autonomen Stromquelle (2) zu kommunizieren, um die Information über die momentane Restkapazität dieser Letzteren zu erlangen oder die Werte für Spannung oder Strom der genannten autonomen Stromquelle zu messen, um die momentane Restenergie der Letzteren zu bestimmen;
**dadurch gekennzeichnet, dass** das genannte elektronische Steuergerät (4) konfiguriert ist:
- um einen Sollwert für die Hauptbeleuchtung, die eine konstante Beleuchtungsstärke (P1) darstellt, ausgehend von der Programmierung einer gewünschten Beleuchtungsdauer (T1) zu bestimmen oder um einen Sollwert für die Beleuchtungsdauer (T1) ausgehend von der Programmierung einer gewünschten konstanten Beleuchtungsstärke (P1) zu bestimmen; und
- um jederzeit den programmierten Sollwert für die Hauptbeleuchtung (P1) anzupassen, wenn der Benutzer einen Sollwert für die Beleuchtungsdauer oder die Beleuchtungsstärke während der Hauptbeleuchtungsphase ändert, um Folgendes festzulegen:
• einen neuen Sollwert für die Beleuchtungsstärke, der an den (die) elektrischen Energiewandler des Typs Spannungs-Strom-Wandler (C1A, C1B, ...) übertragen wird, abhängig von der Restenergie der autonomen Stromquelle (2) und von der programmierten Hauptbeleuchtungsdauer, wenn der Benutzer den Sollwert für die Beleuchtungsdauer ändert; oder
• eine neue Beleuchtungsdauer abhängig von der Restenergie der autonomen Stromquelle und der gewünschten Beleuchtungsstärke, wenn der Benutzer einen Sollwert für die Beleuchtungsstärke ändert.

2. Intelligente tragbare Beleuchtungsvorrichtung nach Anspruch 1, **dadurch gekennzeichnet, dass** das elektronische Steuergerät (4) konfiguriert ist, um:
- die Anzahl der Lichtquellen (1A, 1B, ...), die in der Vorrichtung enthalten sind, durch eine Messung des Stroms für einen vorgegebenen Sollwert für die Beleuchtungsstärke zu bestimmen;
- den Sollwert für die Beleuchtungsstärke, der an den (die) elektrischen Energiewandler des Typs Spannungs-Strom-Wandler (C1A, C1B, ...) übertragen wird, abhängig von der Restenergie der autonomen Stromquelle (2) und von der Anzahl der zu versorgenden Lichtquellen festzulegen, oder in regelmäßigen Zeitabständen oder kontinuierlich die verfügbare Beleuchtungsdauer abhängig von der Restenergie der Stromquelle und von der Anzahl der zu versorgenden Lichtquellen (C1A, C1B, ...) zu bestimmen.

3. Intelligente tragbare Beleuchtungsvorrichtung nach Anspruch 1 oder 2, **dadurch gekennzeichnet, dass** das elektronische Steuergerät konfiguriert ist, um nach Ablauf der Hauptbeleuchtungsphase eine Sicherheitsbeleuchtungsphase zu gewährleisten, die durch eine vorher festgelegte Dauer (T2) definiert ist und während der der Sollwert für die Beleuchtungsstärke, der an den (die) elektrischen Energiewandler des Typs Spannungs-Strom-Wandler übertragen wird, linear oder nicht linear herabgesetzt wird, um eine minimale Beleuchtungsstärke (P2) während der gesamten Sicherheitsbeleuchtungsphase zu gewährleisten.

4. Intelligente tragbare Beleuchtungsvorrichtung nach einem der Ansprüche 1 bis 3, **dadurch gekennzeichnet, dass** das elektronische Steuergerät (4) konfiguriert ist, um es zu ermöglichen, dass in regelmäßigen Zeitabständen oder kontinuierlich der Sollwert für die Beleuchtungsstärke der Lichtquellen abhängig von den Änderungen der gewünschten Beleuchtungszeit angepasst wird, oder um die Beleuchtungsdauer abhängig von den Änderungen des Sollwerts für die gewünschte Beleuchtungsstärke während der Hauptbeleuchtungszeit anzupassen.

5. Intelligente tragbare Beleuchtungsvorrichtung nach einem der Ansprüche 1 bis 4, **dadurch gekennzeichnet, dass** das elektronische Steuergerät (4) konfiguriert ist, um nach Ablauf der Sicherheitsbeleuchtungsphase eine Beleuchtung sehr geringer Stärke (P3) bis zur vollständigen Auslöschung der genannten Vorrichtung zu ermöglichen.

6. Intelligente tragbare Beleuchtungsvorrichtung nach einem der Ansprüche 1 bis 5, **dadurch gekennzeichnet, dass** sie Mittel (3) zum Anschluss an das Wechselstromverteilungsnetz oder das Stromnetz (S) zur Versorgung der künstlichen Lichtquelle(n) (1A, 1B, ...) umfasst, und **dadurch gekennzeichnet, dass** das elektronische Steuergerät (4) konfiguriert ist, um eine nicht vorgesehene Trennung vom genannten Stromnetz zu erkennen und die Versorgung der Lichtquellen (1A, 1B, ...) vom Stromnetz (3) auf die autonome Stromquelle (2) umzuschalten.

7. Intelligente tragbare Beleuchtungsvorrichtung nach einem der Ansprüche 1 bis 6, **dadurch gekennzeichnet, dass** sie ein System zur Messung der in der Batterie (2) noch vorhandenen Energiemenge umfasst.

8. Intelligente tragbare Beleuchtungsvorrichtung nach einem der Ansprüche 1 bis 7, **dadurch gekennzeichnet, dass** ein oder mehrere Helligkeitssensor(en) am elektronischen Steuergerät (4) angebracht ist bzw. sind oder entfernt davon ist bzw. sind und es ermöglicht bzw. ermöglichen, den Sollwert für die Leuchtkraft abhängig von der gewünschten Beleuchtung auf Höhe des Sensors oder vom Mittel der von einer Vielzahl von Sensoren gemessenen Beleuchtungswerte zu steuern und so die Beleuchtung der Scheinwerfer (1A, 1 B, ...) an die natürliche Außenbeleuchtung anzupassen.

9. Intelligente tragbare Beleuchtungsvorrichtung nach einem der Ansprüche 1 bis 8, **dadurch gekennzeichnet, dass** das elektronische Steuergerät (4) konfiguriert ist, um die Restdauer der Beleuchtung in der Hauptphase gemäß den festgelegten Beleuchtungsbedürfnissen zu definieren.

10. Intelligente tragbare Beleuchtungsvorrichtung nach einem der Ansprüche 1 bis 9, **dadurch gekennzeichnet, dass** das elektronische Steuergerät (4) konfiguriert ist, um die Restdauer der Beleuchtung in der Phase der herabgesetzten Beleuchtung zu definieren, wenn das genannte Gerät feststellt, dass die Energiequelle schwächer wird.

11. Intelligente tragbare Beleuchtungsvorrichtung nach einem der Ansprüche 1 bis 10, **dadurch gekennzeichnet, dass** sie Anwesenheitssensoren umfasst, die in das elektronische Steuergerät (4) integriert sind oder entfernt davon sind und die es erlauben, die Anwesenheit oder Abwesenheit von Personen im Wirkungsbereich zu erkennen, und **dadurch gekennzeichnet, dass** das elektronische Steuergerät konfiguriert ist, um die Beleuchtung im Wirkungsbereich zu verringern, wenn keine Bewegung erkannt wird, und um zur anfänglichen Beleuchtung zurückzukehren, wenn wieder die Anwesenheit einer Person erkannt wird.

12. Intelligente tragbare Beleuchtungsvorrichtung nach Anspruch 11, **dadurch gekennzeichnet, dass** sie ein an sich bekanntes visuelles oder akustisches Warnsystem umfasst, das mit der Batterie verbunden ist und Informationen vom genannten Messsystem empfängt, und **dadurch gekennzeichnet, dass** das elektronische Steuergerät (4) konfiguriert ist, um die im Wirkungsbereich anwesenden Personen durch akustische und/oder optische Signale vor der Phase der herabgesetzten Beleuchtung zu warnen.

13. Intelligente tragbare Beleuchtungsvorrichtung nach einem der Ansprüche 1 bis 12, **dadurch gekennzeichnet, dass** die intelligente Beleuchtungsvorrichtung ein Batterieladegerät (6) und Mittel zu dessen Verbindung mit der oder den aufladbaren Batterie(n) und mit dem Stromnetz umfasst, um die genannte(n) Batterie(n) aufzuladen, wenn das Stromnetz verfügbar ist.

14. Intelligente tragbare Beleuchtungsvorrichtung nach einem der Ansprüche 1 bis 13, **dadurch gekennzeichnet, dass** sie eine Anzeigeeinrichtung umfasst, die es ermöglicht, die Höhe des Sollwertes für die Beleuchtung, die Helligkeit und die restliche Nutzungsdauer für die Haupt- und die Sicherheitsbeleuchtungsphasen anzuzeigen.

15. Intelligente tragbare Beleuchtungsvorrichtung nach einem der Ansprüche 1 bis 14, **dadurch gekennzeichnet, dass** die künstliche(n) Lichtquelle(n) aus Scheinwerfern mit starker Leuchtkraft und niedrigem Verbrauch besteht bzw. bestehen wie beispielsweise LED-Scheinwerfern.

16. Intelligente tragbare Beleuchtungsvorrichtung nach einem der Ansprüche 1 bis 15, **dadurch gekennzeichnet, dass** die autonome Stromquelle (2) aus aufladbaren Batterien besteht, insbesondere aus Lithium-lonen-Batterien oder Lithium-Polymer-Batterien.

17. Intelligente tragbare Beleuchtungsvorrichtung nach einem der Ansprüche 1 bis 16, **dadurch gekennzeichnet, dass** die autonome Stromquelle (2) mit einem System zur Erkennung der elektrischen Kennwerte der intelligenten Beleuchtungsfunktion in Form von Spannung und Strom ausgestattet ist, das es der genannten autonomen Stromquelle ermöglicht, diese Kennwerte zu berücksichtigen, um die Sicherheit der genannten autonomen Stromquelle zu gewährleisten.

18. Intelligente tragbare Beleuchtungsvorrichtung nach einem der Ansprüche 1 bis 17, **dadurch gekennzeichnet, dass** die tragbare Beleuchtungsvorrichtung in Form einer oder mehrerer Beleuchtungseinheit(en) (10A, 10B) ausgeführt ist, wobei diese Beleuchtungseinheit oder jede der Beleuchtungseinheiten mindestens zwei in Reihe verbundene Scheinwerfer (1A, 1B, 1A', 18) umfasst und wobei das elektronische Steuergerät (4) einerseits mit einem dieser Scheinwerfer (1A) und andererseits mit der Stromquelle (2, 3) verbunden ist.

## Claims

1. Smart portable lighting device comprising:
- at least one artificial light source (1A) with a high light power, or several artificial light sources (1A, 1B,...) with a high light power, wherein said artificial light source (1A) or each of these artificial light sources (1A, 1B,...) is/are equipped with a voltage/current electrical power converter (C1A, C1B,...) which is able to regulate the power of said light sources in accordance with a given set point,
- an independent electrical power source (2) formed of at least one rechargeable battery to supply the artificial light source(s) by means of voltage/current electrical power converters,
- an electronic control box (4) comprising at least one digital processing unit linked to auxiliary circuits and connected, on the one hand, to the independent electrical power source (2) and, on the other hand, to the converter(s) (C1A, C1B,...) of the artificial light source(s) (1A, 1B, ...), wherein said electronic control box (4) is configured to communicate with the independent power source (2) to obtain information about the instantaneous residual capacity of this or to measure the voltage or current characteristics of said independent power source to determine the instantaneous residual energy of this;
**characterised in that** said electronic control box (4) is configured:
- to determine a main illumination set point having a constant illumination power (P1) from programming a desired lighting period (T1), or to determine a lighting period set point (T1) from programming a desired constant illumination power (P1); and
- to readjust the main programmed illumination set point (P1) at any time, as soon as the user changes an illumination period or illumination power set point during the main illumination phase, in order to establish:
o a new lighting power set point transmitted to the voltage/current electrical power converter(s) (C1A, C1B,...) depending on the residual energy of the independent electrical power source (2) and the main programmed illumination period, as soon as the user changes the illumination period set point; or
o a new illumination period, depending on the residual energy of the independent electrical power source and the desired illumination power, as soon as the user changes an illumination power set point.

2. Smart portable lighting device according to claim 1, **characterised in that** the electronic control box (4) is configured to:
- determine the number of light sources (1A, 1B, ... ) contained in the device, by measuring the current for a given lighting power set point;
- establish the lighting power set point transmitted to the voltage/current electrical power converter(s) (C1A, C1B, ...) depending on the residual energy of the independent electrical power supply (2), and the number of light sources to supply, or determine, periodically or continuously, the illumination period available depending on the residual energy of the electrical power source and the number of light sources to supply (C1A, C1B, ...).

3. Smart portable lighting device according to one of claims 1 or 2, **characterised in that** the electronic control box is configured to ensure, at the end of the main illumination phase, a safety illumination phase defined by a predetermined period (T2) during which the lighting power set point transmitted to the voltage/current electrical power converter(s) is degraded, in a linear or non-linear manner, to ensure a minimum illumination power (P2) throughout the safety illumination phase.

4. Smart portable lighting device according to one of claims 1 to 3, **characterised in that** the electronic control box (4) is configured to make it possible to readjust, periodically or continuously, the illumination power set point of the light sources, depending on the modifications to the desired illumination time, or to readjust the available illumination period depending on the modifications to the desired illumination power set point, during the main illumination phase.

5. Smart portable lighting device according to one of claims 1 to 4, **characterised in that** the electronic control box (4) is configured to allow, at the end of the safety illumination phase, very low power (P3) lighting until the complete shutdown of said device.

6. Smart portable lighting device according to one of claims 1 to 5, **characterised in that** it comprises means (3) for connection to the alternating current or mains (S) electrical distribution network to supply the artificial light source(s) (1A, 1B, ...), and the electronic control box (4) is configured to detect a power cut of said mains and to switch the supply of the light sources (1A, 1B, ...) from the mains (3) to the independent electrical power source (2).

7. Smart portable lighting device according to one of claims 1 to 6, **characterised in that** it comprises a system to measure the amount of energy remaining in the battery (2).

8. Smart portable lighting device according to one of claims 1 to 7, **characterised in that** one or more light sensor(s) are connected to the electronic control box (4) or are remote and make it possible to control the light power set point depending on the desired illumination at the sensor or the average illumination measured by a plurality of sensors, and thus adjust the lighting of the projectors (1A, 1B, ...) to the natural outdoor lighting.

9. Smart portable lighting device according to one of claims 1 to 8, characterised that the electronic control box (4) is configured to define the remaining illumination period in the main phase, in accordance with the illumination requirements defined.

10. Smart portable lighting device according to one of claims 1 to 9, **characterised in that** the electronic control box (4) is configured to define the remaining illumination period in the degraded phase as soon as said box determines that the power source is about to run out.

11. Smart portable lighting device according to one of claims 1 to 10, **characterised in that** it comprises presence sensors which are integrated into the electronic control box (4) or are remote, which make it possible to detect the presence or absence of people in the intervention zone, and the electronic control box is configured to reduce illumination of the intervention zone when no movement is detected and to return to initial illumination when a presence is detected again.

12. Smart portable lighting device according to claim 11, **characterised in that** it comprises a known visual or audible type of means of alert which is connected to the battery and receives information from said measurement system, and the electronic control box (4) is configured to alert people present in the intervention zone of the degraded illumination phase by means of sound and/or light signals.

13. Smart portable lighting device according to one of claims 1 to 12, **characterised in that** the smart lighting device comprises a battery charger (6) and means to connect this to the rechargeable battery/batteries and to the mains to recharge said battery/batteries when the mains are available.

14. Smart portable lighting device according to one of claims 1 to 13, **characterised in that** it comprises a display which makes it possible to display the level of the illumination set point, the luminance and the remaining period of use for the main and safety illumination phases.

15. Smart portable lighting device according to one of claims 1 to 14, **characterised in that** the artificial light source(s) is/are formed of projectors with high light power and low consumption, such as LED projectors.

16. Smart portable lighting device according to one of claims 1 to 15, **characterised in that** the independent electrical power source (2) is formed of rechargeable batteries, in particular lithium-ion batteries or lithium-polymer batteries.

17. Smart portable lighting device according to one of claims 1 to 16, **characterised in that** the independent electrical power source (2) is provided with a recognition system for the electrical characteristics of the smart lighting function, in terms of voltage and current, which allows said independent electrical power source to consider these characteristics to ensure the safety of said independent electrical power source.

18. Smart portable lighting device according to one of claims 1 to 17, **characterised in that** the portable lighting device is created in the form of one or several lighting units (10A, 10B), said lighting unit or each of the lighting units comprising at least two projectors (1A, 1B; 1A', 1B') connected in series, wherein the electronic control box (4) is connected, on the one hand, to one of these projectors (1A) and, on the other hand, to the electrical power supply (2, 3).
